# EUROPEAN PATENT SPECIFICATION

(11) **EP 1 405 317 B1**
(45) Date of publication and mention of the grant of the patent: **24.08.2011**
(21) Application number: 02774098.4
(22) Date of filing: 11.04.2002
(51) Int. Cl.: H01B 1/20, B32B 27/00, B32B 27/20

(54) **CHARGE-DISSIPATING, WHITE THERMAL CONTROL FILM, AND STRUCTURES UTILIZING THE THERMAL CONTROL FILM**
LADUNG DISSIPIERENDER, WEISSER THERMISCHER KONTROLLFILM UND STRUKTUREN MIT DEM THERMISCHEN KONTROLLFILM
FILM BLANC THERMOREGULATEUR A DISSIPATION DE CHARGE ET STRUCTURES FAISANT APPEL AUDIT FILM

(30) Priority: 14.05.2001 US 855232
(43) Date of publication of application: 07.04.2004
(73) Proprietor: The Boeing Company, Chicago, IL 60606-1596 (US)
(72) Inventor: LONG, Lynn, E., Manhattan Beach, CA 90266 (US); CORDARO, James, F., Ridgecrest, CA 93555 (US)
(74) Representative: Weller, Wolfgang
(86) International application number: PCT/US2002/011800
(87) International publication number: WO 2002/097829

(56) References cited:
- US-A- 5 215 824
- US-A- 5 686 186
- US-A- 5 798 060
- ZHAO L ET AL: "Thermal contact conductance across filled polyimide films at cryogenic temperatures" CRYOGENICS, IPC SCIENCE AND TECHNOLOGY PRESS LTD. GUILDFORD, GB, vol. 39, no. 10, 12 October 1999 (1999-10-12), pages 803-809, XP004244013 ISSN: 0011-2275

## Description

This invention relates to the protection of articles in a space environment, and, more particularly, to a white thermal control film which is sufficiently electrically conducting to dissipate accumulated electrical charge.

### BACKGROUND OF THE INVENTION

Spacecraft are subjected to a wide range of thermal environments during service. One side of the spacecraft may face free space, while the other side faces the sun. Heat is radiated into free space to cool the spacecraft, but the spacecraft can be heated intensively in direct sunlight.

Active and passive temperature control techniques are used to maintain the interior temperature of the spacecraft, which contains persons or sensitive instruments, within acceptable operating limits. Active temperature control usually involves machinery or electrical devices, such as electrical heaters, electrical coolers, and heat pipes. The present invention deals with passive temperature control, where no machinery or electrical devices are used.

One approach to passive temperature control utilizes a freestanding thermal control film, sometimes termed a "sunshield" or "thermal blanket". The thermal control film is positioned between the sun and the structure that is to be protected, and serves somewhat the same function as a parasol to prevent the direct rays of the sun from contacting the structure. The freestanding thermal control film is desirably white in color to achieve a maximum emissivity and minimal solar absorptance, so that the freestanding film itself is not heated to an excessively high temperature during service.

The freestanding thermal control film desirably dissipates electrostatic charge as well. Structures in space are in the flux of the solar wind, which deposits electrons onto the surfaces of the structures as a static charge. Unless the static charge is dissipated, it will build to a level at which it interferes with the operation of electrical devices and may produce a discharge in the form of a spark that damages the structures.

A variety of techniques have been used to make white, electrostatically dissipative, freestanding thermal control films. In one, electrically conductive layers are deposited on the surfaces of unfilled polyimide films. These thermal control films provide electrostatic charge dissipation and reasonably good emissivity, but are expensive, fragile, and easily damaged during handling and in service. In another approach, the polyimide is filled with electrically conductive carbon particles, which forms a black conductive substrate, and then painted white to provide the necessary thermal properties. The thermal control film produced by this approach is operable, but is expensive, heavy, and prone to de-adhesion of the paint from the substrate during service.

There is a need for an improved approach to white, charge-dissipating, freestanding thermal control films. The present invention fulfills this need, and further provides related advantages.

### SUMMARY OF THE INVENTION

The present invention provides a freestanding white thermal control film which is sufficiently electrically conductive to dissipate static charges. The white color and the static dissipation capability are derived from filler particles embedded in a substrate film, not from coatings or layers of different compositions applied to the surfaces of the substrate. There is consequently no possibility of failures due to de-adhesion of coatings or layers. Additionally, the freestanding thermal control film is light in weight and relatively inexpensive to produce as it has only a single layer that may be produced by conventional film-forming techniques.

In accordance with the invention, a thermal control film comprises a freestanding sheet substrate formed of a binder made of a polymeric material, and a plurality of filler particles dispersed throughout the polymeric material. The plurality of filler particles comprises a plurality of particles with a thin passivating surface layer deposited thereon. The passivating surface layer has a thickness in the order of from 50 to 100 nanometers.

Preferably, the filler particles are white in color. The filler particles desirably comprise a substantially nonconducting ceramic material which has been doped with an element that provides a desired level of electrical conductivity.

The filler particles are preferably metal oxide particles, most preferably zinc oxide particles, doped with an element that provides a desired level of electrical conductivity in the metal oxide particles. A passivating surface layer of an organosilane polymer is preferably present on the particles.

The binder is desirably a polyimide. A preferred polyimide is a partially prepolymerized fluorinated, optically transparent aromatic polyimide polymer, initially furnished in powder form and then processed to a freestanding sheet with the filler particles dispersed therein. The sheet substrate typically has a thickness of from 25.4 µm [0.001 inch] to 76.2 µm [0.003 inch].

A structure protected by a thermal control film comprises an article having an article surface, and a freestanding thermal control film positioned to protect at least a portion of the article surface. The thermal control film comprises a freestanding sheet substrate formed of a binder made of a polymeric material, and a plurality of particles dispersed throughout the polymeric material. The plurality of filler particles comprises a plurality of particles with a thin passivating surface layer deposited thereon. The passivating surface layer has a thickness in the order of from 50 to 100 nanometers.

The inventors have observed that it is difficult to incorporate the preferred metal oxide particles into polymer binders such as polyimides to obtain a film with the required mechanical properties to be freestanding. The metal oxide filler particles tend to catalyze the premature polymerization of the polymer precursor before the film may be physically formed to its desired physical characteristics. In the present approach, the surface of the particulate filler is passivated to reduce the tendency to catalyzation of the polymer. Additionally, a preferred polymer is a partially prepolymerized polyimide resin that has a reduced tendency to catalyzed premature full polymerization. The result is that the particle-filled film material may be prepared and physically formed to the desired shape prior to polymerization. It may be formed as a freestanding sheet that has sufficient physical strength to maintain its integrity in a freestanding form, as contrasted with the preparation of paints which require much less strength and physical integrity and are not normally used in a freestanding form.

Because the thermal control film is a single layer which has the necessary white color and also sufficient electrical conductivity to dispel static charges, it is economical to produce by conventional film-forming techniques and is relatively robust in both production and service.

Other features and advantages of the present invention will be apparent from the following more detailed description of the preferred embodiment, taken in conjunction with the accompanying drawings, which illustrate, by way of example, the principles of the invention. The scope of the invention is not, however, limited to this preferred embodiment.

### BRIEF DESCRIPTION OF THE DRAWINGS

Figure 1 is a side elevational view of a freestanding thermal control film according to the invention;
Figure 2 is an enlarged elevational view of a particle used in the thermal control film;
Figure 3 is a side elevational view of a structure wherein the thermal control film of Figure 1 is positioned to protect an article; and
Figure 4 is a block diagram of a method for the preparation of the thermal control film of Figure 1 and the structure of Figure 3.

### DETAILED DESCRIPTION OF THE INVENTION

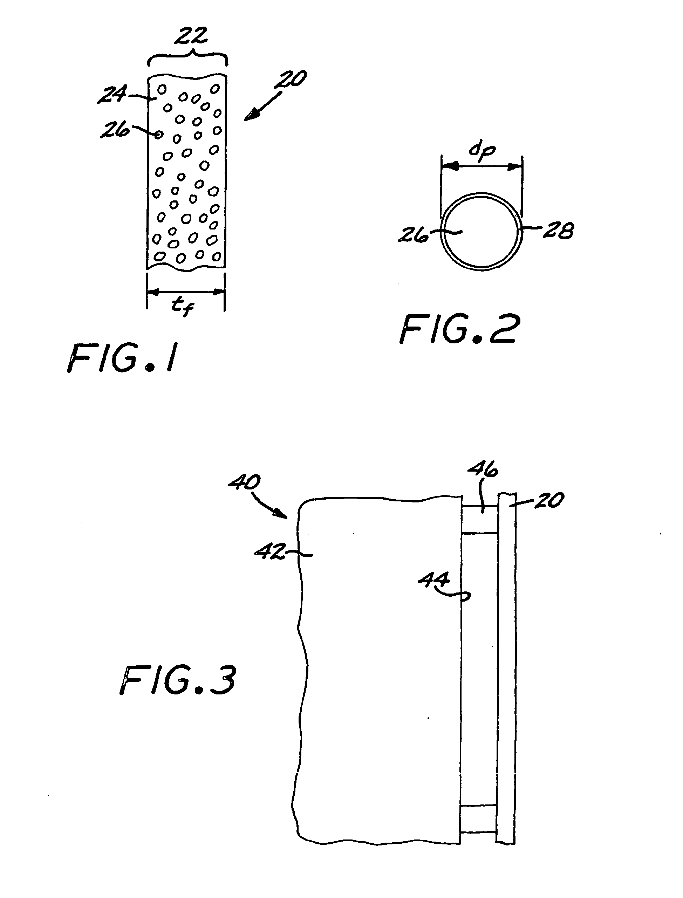

Figure 1 illustrates a freestanding thermal control film 20 according to the invention. The thermal control film 20 comprises a freestanding sheet substrate 22 comprising a binder 24 made of a polymeric material. The thermal control film is a freestanding element which may be made of any operable thickness, but it preferably has a thickness t_{f} of from 25.4 µm (0.001 inches) to 76.2 µm (0.003 inches). (A "freestanding" material is contrasted with, for example, a paint layer that is supported flat on a surface and generally does not have sufficient cohesive strength to remain integral when supported from only a few points.) A plurality of filler particles 26 (which serve as a pigment) is dispersed throughout the polymeric material. Prior to drying, a solvent for the polymer is also present, but the solvent is evaporated during an evaporation operation. The composition of the filler particles 26, the binder 24, and the solvent, their proportions, and the preparation of the thermal control film 20 will be described in greater detail subsequently.

The filler particles 26 are preferably white in color to impart a white color to the finished thermal control film 20. The filler particles comprise a substantially nonconducting ceramic material which has been doped to impart a controlled level of electrical resistivity to the filler particles and thence to the thermal control film 20. The bulk (volume) electrical resistivity of the thermal control film 20 is preferably from 1 x 10⁶ to 1 x 10⁹ ohmcentimeter. If the resistivity is outside this range, the thermal control film 20 is functional for thermal control but will have either too great or too little resistivity to function to its best advantage in the dissipation of electrical charge.

The filler particles are preferably a doped metal oxide composition, most preferably doped zinc oxide. Other doped metal oxides may be used or in addition to zinc oxide, such as the simple oxides titanium dioxide (TiO₂) or tin oxide (SnO₂), or the complex oxides zinc gallium oxide (ZnGa₂O₄) or zinc aluminum oxide (ZnAl₂O₄), or mixtures thereof.

The dopant may be produced by any operable approach. For example, in one approach zinc oxide may be chemically doped with shallow donor impurities such as aluminum, gallium, or indium. In another approach, zinc oxide may be reduced by heating in hydrogen gas so that native defects form the dopants. Reduction in hydrogen gas forms ZnO wherein oxygen vacancies are the donor states, and Zn₊ O wherein zinc interstitial atoms are the donor states. Suitable doped pigment particles and their preparation are discussed, for example, in US Patents 5,494,693; 5,820,669; and 6,099,639. The dopant is preferably present at a concentration of from 0.1 weight percent to 3.5 weight percent of the total particle weight. The shape and size of the filler particles are not critical. However, the filler particles desirably have a diameter dₚ that is much less than the thickness of the thermal control film t_{f}. If the value of dₚ approaches that of t_{f}, the filler particles may cause the film to tear. In the typical case of 4 of 25.4 µm (0.001 inches) to 76.2 µm (0.003 inches) dₚ is preferably from about 0.1 micrometer to about 5.0 micrometers, most preferably in the range of from about 0.3 micrometers to about 0.7 micrometers for effective light scattering.

As shown in Figure 2, the filler particles 26 have a thin passivating surface layer 28 deposited thereon. (Figure 2 is not to scale, and usually the surface layer 28 is so thin that it cannot be discerned in an illustration to scale.) The passivating surface layer 28 inhibits the catalyzing reaction of the filler particles 26 with the binder 24 prior to full polymerization of the binder, thereby aiding in the avoidance of premature polymerization of the binder 24. The passivating surface layer 28 is quite thin, and its thickness depends upon the process used to form it. Typically, however, the surface layer 28 is essentially a hydrophobic monolayer having a thickness on the order of from about 50 to about 100 nanometers. The passivating surface layer 28 is preferably an organosilane polymer. Examples of such organosilane polymers and the techniques for coating the particles are found in US Patents 5,756,788; 5,565,591; and 5,486,631. Another technique that may be applied in the present situation to coat the particles with the surface layer 28 is that described in W.J. van Ooij et al., "Protecting metals with silane coupling agents," Chemtech, Feb. 1998, pages 26-35. In such an approach, bis-1,2-(triethoxysilyl)ethane is hydrolyzed in water, and then the filler particles are mixed into the solution so that a hydrophobic surface layer 28 is formed on the particles.

The binder 24 is preferably a polyimide. Polyimides are resistant to UV radiation, with the result that there is little darkening of the film that would absorb solar energy. A preferred polyimide is LaRC-CP1 or LaRC-CP2 polyimide available commercially from SRS Technologies, Huntsville, AL. The LaRC-CP1 and LaRC-CP2 polymers are described in US Patent 5,428,102. The LaRC-CP1 or LaRC-CP2 polyimide is furnished and used as a precursor in a partially prepolymerized form that is less susceptible to premature polymerization than would be an un-prepolymerized form. That is, the polymerization process is started but not completed at the time the filler particles are introduced. After full polymerization, the LaRC-CP1 polyimide is clear, does not have a yellowish cast, and retains its clarity for extended periods of time in a space environment. This allows the thermal control film to exhibit the white color of the filler particles 26 without interference from a yellowing or other color modification resulting from changes in the binder 24 during prolonged space exposure.

In a preferred case, after evaporation of the solvent the filler particles 26 are present in a concentration of from 100 to 300 percent by weight of the binder 24, most preferably from 150 to 200 percent by weight. The binder 24 occupies the remainder of the volume of the substrate 22.

Figure 3 illustrates a structure 40 having an article 42 with an article surface 44. The thermal control film 20 is positioned to protect the article surface 44 and thence the article 42. The article 42 is typically a spacecraft, and specifically a portion of a spacecraft such as an antenna, a bus structural port, or an exposed mechanism. In the illustrated structure 40, the thermal control film 20 is supported overlying and spaced apart from the article 42 by standoff fasteners 46. These standoff fasteners 46 may be electrically conducting to conduct the static charge from the thermal control film 20 to the conductive article 42 and thence to an electrical ground, or separate conductors may be provided from the thermal control film 20 to the electrical ground.

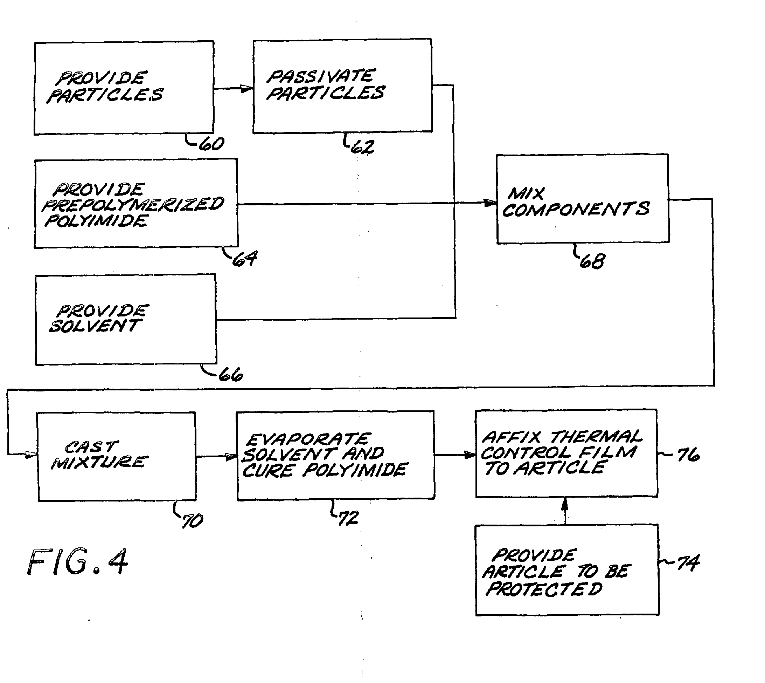

Figure 4 is a block flow diagram of a preferred approach for preparing the thermal control film 20 and protecting the article 42. The filler particles 26 are provided, numeral 60, and coated with the passivating surface layer 28, numeral 62. In a reduction to practice of the invention, the inventors prepared the doped filler particles 26 as QivaStar P06 doped zinc oxide particles, and the passivating surface layer 28 was applied by Sunsmart, Wainscott, NY using its commercial coating PS1256/4. The prepolymerized LaRC-CP1 polyimide precursor according to US patent 5,428,102 is provided, numeral 64. A suitable solvent is provided, numeral 66. The solvent desirably achieves a full dissolution of the polymeric precursor during the processing. Operable solvents for the present approach using LaRC-CP1 polyimide precursor include methyl ethyl ketone (MEK), ethyl acetate, 2-methoxyethyl ether (diglyme), and N,N-dimethylacetamide (DMAC).

The components are mixed together, numeral 68. The preferred ratio of the components is 10 parts by weight of the LaRC-CP1 polyimide precursor, from (10 to 20 parts by weight of the doped-and-coated zinc oxide particle pigment, and from 60 to 100 parts by weight of the solvent The polyimide is dissolved in the solvent, and the coated filler particles are slurried in the resulting solution. The solvent is evaporated during subsequent processing. This amount of the filler particles yields an optimum particle-to-binder weight ratio of from 1:1 to 2:1 in the final thermal control film 20. If the particle-to-binder weight ratio is less than about 1:1, the thermal control film is operable but the thermal and electrical properties are compromised. If the particle-to-binder weight ratio is greater than about 2:1, the thermal control film is operable but the mechanical properties are reduced and may be insufficient to form a freestanding film.

Mixing in the reduction to practice was accomplished in a ceramic milling jar with a ceramic lid. The components were mixed for a minimum of 8 hours, and preferably 16 hours, to produce a Hegman grind of at least 7 on the Hegman grind scale. After mixing is complete, it is observed that the viscosity of the mixture slowly increases over time. The mixture is usable for about a week, and then becomes too viscous to cast.

While of operable viscosity, the mixture is cast, numeral 70, to form a film such as the thermal control film 20. The mixture may be cast using any operable approach. In a demonstration of the technology, the mixture was cast onto a plate and allowed to spread to the film thickness. Spin casting may be used. In commercial practice, there may be employed casting technology such as is widely used to produce other types of thin polymeric films.

The thin film is thereafter heated to evaporate the solvent and to cure the polymer binder, numeral 72. For the preferred LaRC-CP1 polyimide binder, the heating is performed in a vacuum or air circulating oven at a temperature of 260°C for 2 hours.

The resulting freestanding thin film is white in color. It may be cut to the required size.

The article to be protected is provided, numeral 74. The freestanding thermal control film 20 is positioned to protect the surface 44 of the article 42, numeral 76, by any operable approach. For example, the freestanding thermal control film 20 may be supported from the article using standoff fasteners 46, as illustrated in Figure 3. It may instead be supported from the article using other techniques. Alternatively, the thermal control film may be supported from other structure and positioned to shade the article surface to be protected.

## Claims

1. A thermal control film (20), comprising
a freestanding sheet substrate (22) comprising a binder (24) made of a polymeric material; and
a plurality of filler particles (26) dispersed throughout the polymeric material, the filler particles (26) comprising a plurality of particles with a thin passivating surface layer (28) deposited thereon, said surface layer (28) having a thickness in the order of from 50 to 100 nanometers.

2. The thermal control film (20) of claim 1, wherein the filler particles (26) are white in color.

3. The thermal control film (20) of claim 1 or claim 2, wherein the filler particles (26) comprise a substantially nonconducting ceramic material which has been doped with an element that provides a desired level of electrical conductivity.

4. The thermal control film (20) of any of claims 1-3, wherein the filler particles (26) include a passivating surface layer (28) of an organosilane polymer.

5. The thermal control film (20) of any of claims 1-4, wherein the binder (24) is a polyimide.

6. The thermal control film (20) of any of claims 1-4, wherein the binder (24) is a partially prepolymerized fluorinated, optically transparent aromatic polyimide polymer.

7. The thermal control film (20) of any of claims 1-6, wherein the filler particles (26) are white doped metal oxide particles.

8. The thermal control film (20) of any of claims 1-6, wherein the filler particles (26) are doped zinc oxide particles.

9. The thermal control film (20) of any of claims 1-6, wherein the filler particles (26) are zinc oxide particles doped with an element that forms shallow donorlike states in the zinc oxide.

10. The thermal control film (20) of any of claims 1-9, wherein the sheet substrate (22) has a thickness of from 25.4 µm (0.001 inch) to 76.2 µm (0.003 inch).

11. A structure protected by a thermal control film (20), comprising:
an article (42) having an article surface (44); and
a freestanding thermal control film (20) positioned to protect at least a portion of the article surface (44), the thermal control film (20) comprising:
a freestanding sheet substrate (22) comprising a binder (24) made of a polymeric material, and
a plurality of filler particles (26) dispersed throughout the polymeric material, the plurality of filler particles (26) comprising a plurality of particles with a thin passivating surface layer (28) deposited thereon, said surface layer (28) having a thickness in the order of from 50 to 100 nanometers.

12. The structure of claim 11, wherein the article (42) is selected from the group consisting of an antenna, a bus structural port, and an exposed mechanism.

13. The structure of claim 11 or claim 12, further including a standoff fastener (46) between the article (42) and the thermal control film (20).

## Patentansprüche

1. Wärmekontrollfolie (20), die folgendes aufweist, nämlich
ein freistehendes blattförmiges Substrat (22), das ein Bindemittel (24) aus einem Polymermaterial aufweist; und
eine Vielzahl an Füllerteilchen (26), die in dem Polymermaterial verteilt sind, wobei die Füllerteilchen (26) eine Vielzahl an Teilchen aufweisen, auf denen eine dünne passivierende Oberflächenschicht (28) aufgebracht ist, wobei die Oberflächenschicht (28) eine Dicke im Bereich von 50 bis 100 Nanometer aufweist.

2. Wärmekontrollfolie (20) nach Anspruch 1, bei der die Füllerteilchen (26) in weißer Farbe sind.

3. Wärmekontrollfolie (20) nach Anspruch 1 oder Anspruch 2, bei der die Füllerteilchen (26) ein im Wesentlichen nicht leitendes keramisches Material aufweisen, das mit einem Element dotiert ist, das ein gewünschtes Maß an elektrischer Leitfähigkeit schafft.

4. Wärmekontrollfolie (20) nach einem der Ansprüche 1 bis 3, bei der die Füllerteilchen (26) eine passivierende Oberflächenschicht (28) aus einem Organosilanpolymer aufweisen.

5. Wärmekontrollfolie (20) nach einem der Ansprüche 1 bis 4, bei der das Bindemittel (24) ein Polyimid ist.

6. Wärmekontrollfolie (20) nach einem der Ansprüche 1 bis 4, bei der das Bindemittel (24) ein teilweise vorpolymerisiertes fluoriniertes, optisch transparentes aromatisches Polyimidpolymer ist.

7. Wärmekontrollfolie (20) nach einem der Ansprüche 1 bis 6, bei der die Füllerteilchen (26) weiße dotierte Metalloxidteilchen sind.

8. Wärmekontrollfolie (20) nach einem der Ansprüche 1 bis 6, bei der die Füllerteilchen (26) dotierte Zinkoxidteilchen sind.

9. Wärmekontrollfolie (20) nach einem der Ansprüche 1 bis 6, bei der die Füllerteilchen (26) Zinkoxidteilchen sind, die mit einem Element dotiert sind, das schwache donorähnliche Zustände in dem Zinkoxid ausbildet.

10. Wärmekontrollfolie (20) nach einem der Ansprüche 1 bis 9, bei der das blattförmige Substrat (22) eine Dicke von 25,4 µm (0,001 inch) bis 76,2 µm (0,003 inch) aufweist.

11. Struktur, die durch eine Wärmekontrollfolie (20) geschützt ist, die folgendes aufweist, nämlich:
einen Gegenstand (42), der eine Oberfläche (44) aufweist; und
eine freistehende Wärmekontrollfolie (20), die so angeordnet ist, dass diese zumindest Teile der Oberfläche (44) des Artikels schützt, wobei die Wärmekontrollfolie (20) folgendes aufweist, nämlich
ein freistehendes blattförmiges Substrat (22), das ein Bindemittel (24) aus einem Polymermaterial aufweist, und
eine Vielzahl an Füllerteilchen (26), die in dem Polymermaterial verteilt sind, wobei die Füllerteilchen (26) eine Vielzahl an Teilchen aufweisen auf denen eine dünne passivierende Oberflächenschicht (28) aufgebracht ist, wobei die Oberflächenschicht (28) eine Dicke im Bereich von 50 bis 100 Nanometer aufweist.

12. Struktur nach Anspruch 11, bei der der Gegenstand (42) ausgewählt ist aus der Gruppe bestehend aus einer Antenne, einem strukturellen Busport und einem freiliegenden Mechanismus.

13. Struktur nach Anspruch 11 oder Anspruch 12, die ferner folgendes aufweist, nämlich
eine hochstehende Befestigung (46) zwischen dem Gegenstand (42) und der Wärmekontrollfolie (20).

## Revendications

1. Film thermorégulateur (20), comprenant
un substrat de feuille autonome (22) comprenant un agent liant (24) constitué d'un matériau polymère ; et
une pluralité de particules de charge (26) dispersées dans l'ensemble du matériau polymère, les particules de charge (26) comprenant une pluralité de particules ayant une couche de surface de passivation fine (28) déposée sur celles-ci, ladite couche de surface (28) ayant une épaisseur de l'ordre de 50 à 100 nanomètres.

2. Film thermorégulateur (20) selon la revendication 1, dans lequel les particules de charge (26) sont de couleur blanche.

3. Film thermorégulateur (20) selon la revendication 1 ou la revendication 2, dans lequel les particules de charge (26) comprennent un matériau céramique globalement non conducteur qui a été dopé avec un élément qui fournit un niveau souhaité de conductivité électrique.

4. Film thermorégulateur (20) selon l'une quelconque des revendications 1 à 3, dans lequel les particules de charge (26) comprennent une couche de surface de passivation (28) d'un polymère d'organosilane.

5. Film thermorégulateur (20) selon l'une quelconque des revendications 1 à 4, dans lequel l'agent liant (24) est un polyimide.

6. Film thermorégulateur (20) selon l'une quelconque des revendications 1 à 4, dans lequel l'agent liant (24) est un polymère de polyimide aromatique optiquement transparent, fluoré et partiellement pré-polymérisé.

7. Film thermorégulateur (20) selon l'une quelconque des revendications 1 à 6, dans lequel les particules de charge (26) sont des particules d'oxyde de métal dopées blanches.

8. Film thermorégulateur (20) selon l'une quelconque des revendications 1 à 6, dans lequel les particules de charge (26) sont des particules d'oxyde de zinc dopées.

9. Film thermorégulateur (20) selon l'une quelconque des revendications 1 à 6, dans lequel les particules de charge (26) sont des particules d'oxyde de zinc dopées avec un élément qui forme des états de type donneurs superficiels dans l'oxyde de zinc.

10. Film thermorégulateur (20) selon l'une quelconque des revendications 1 à 9, dans lequel le substrat de feuille (22) a une épaisseur de 25,4 µm (0,001 pouce) à 76,2 µm (0,003 pouce).

11. Structure protégée par un film thermorégulateur (20) comprenant :
un article (42) ayant une surface d'article (44) ; et
un film thermorégulateur autonome (20) positionné pour protéger au moins une partie de la surface d'article (44), le film thermorégulateur (20) comprenant :
un substrat de feuille autonome (22) comprenant un agent liant (24) constitué d'un matériau polymère, et
une pluralité de particules de charge (26) dispersées dans l'ensemble du matériau polymère, la pluralité de particules de charge (26) comprenant une pluralité de particules ayant une couche de surface de passivation fine (28) déposée sur celles-ci, ladite couche de surface (28) ayant une épaisseur de l'ordre de 50 à 100 nanomètres.

12. Structure selon la revendication 11, dans laquelle l'article (42) est sélectionné à partir du groupe constitué d'une antenne, d'un port structurel de bus et d'un mécanisme exposé.

13. Structure selon la revendication 11 ou la revendication 12, comprenant en outre
un élément de fixation de séparation (46) entre l'article (42) et le film thermorégulateur (20).
